Europäisches Patentamt

European Patent Office

Office européen des brevets

(11) Veröffentlichungsnummer: **0 202 285**
**B1**

(12) **EUROPÄISCHE PATENTSCHRIFT**

(45) Veröffentlichungstag der Patentschrift: **09.05.90**

(21) Anmeldenummer: **85905822.4**

(22) Anmeldetag: **27.11.85**

(86) Internationale Anmeldenummer:
**PCT/EP85/00650**

(87) Internationale Veröffentlichungsnummer:
**WO 86/03279 05.06.86 Gazette 86/12**

(51) Int. Cl.⁵: **F 23 G 5/30, F 23 G 5/02, F 23 G 5/46, F 23 J 15/00, B 01 J 8/38, B 01 D 53/34, B 03 B 9/06**

(54) **WIRBELSCHICHT-REAKTOR ZUR TERMISCHEN BESEITIGUNG VON ABFÄLLEN.**

(30) Priorität: **30.11.84 DE 3443721**

(43) Veröffentlichungstag der Anmeldung:
**26.11.86 Patentblatt 86/48**

(45) Bekanntmachung des Hinweises auf die Patenterteilung:
**09.05.90 Patentblatt 90/19**

(84) Benannte Vertragsstaaten:
**AT BE CH FR GB IT LI LU NL SE**

(56) Entgegenhaltungen:
**EP-A-0 005 965**
**WO-A-84/04053**
**BE-A- 378 819**
**DE-A-1 451 489**
**DE-A-2 211 965**
**DE-A-2 356 060**
**DE-A-2 439 234**
**DE-A-2 846 032**
**DE-A-3 107 357**
**DE-A-3 129 638**
**DE-A-3 130 602**
**GB-A-1 514 711**
**GB-A-1 604 312**
**US-A-3 150 923**
**US-A-3 417 978**

(73) Patentinhaber: **Förster, Günther**
**Neuen Bäue 27**
**D-6300 Giessen (DE)**
(73) Patentinhaber: **Taetzner, Wolfgang, Dr.**
**Isenburgring 11**
**D-6050 Offenbach a.M. (DE)**

(72) Erfinder: **Förster, Günther**
**Neuen Bäue 27**
**D-6300 Giessen (DE)**
Erfinder: **Taetzner, Wolfgang, Dr.**
**Isenburgring 11**
**D-6050 Offenbach a.M. (DE)**

(74) Vertreter: **Eyer, Eckhardt Philipp, Dipl.-Ing. et al**
**Patentanwälte Eyer & Linser Robert-Bosch-Strasse 12a**
**D-6072 Dreieich (DE)**

EP 0 202 285 B1

**Beschreibung**

Die Erfindung betrifft einen Wirbelschicht-Reaktor zur thermischen Beseitigung von Abfällen, bestehend aus einem Schacht mit einem sich im unteren Bereich über den gesamten Querschnitt erstreckenden Rost, mindestens einem Zuführungskanal zu dem unterhalb des Rostes gelegenen Bereich für dem Reaktionssauerstoff, einer oder mehrerer Zuführungsöffnungen für feste Stoffe und/oder Zuschlagstoffe in der Schachtwand sowie einem vom Kopf bzw. Dom des Schachtes ausgehenden Abzugskanal für gasförmige Reaktionsprodukte und einer seitlich unmittelbar über dem Rost liegenden Öffnung zum Abzug fester Reaktionsprodukte, wobei der Rost stufenförmig mit abwechselnd im wesentlichen horizontalen Rostflächen sowie im wesentlichen vertikalen Rostflächen ausgebildet ist und in dem unterhalb des Rostes gelegenen Raum Zuführungsleitungen für gasförmige und/oder flüssige Brenn- oder Abfallstoffe vorgesehen sind. Ein derartiger Reaktor ist nach der EP—A—5 965 bzw. der DE—A—3 107 357 bekannt.

Wirbelschicht-Reaktoren dieser Art zur Beseitigung der anfallenden Haushalts- und Industrieabfälle befinden sich bereits im Einsatz, sie weisen jedoch bisher noch eine Reihe schwerwiegender Nachteile sowohl verbrennungstechnischer als auch steuerungstechnischer Art auf. So ist bisher beispielsweise eine Steuerung der Wirbelschicht nach Temperatur und Fluidisierungsgrad und damit eine Regulierung des Reaktors entsprechend den in Bezug auf Wärmegleichwerte, Brennbarkeit, Wassergehalt und dergl. stark schwankenden Bedingungen des Materials nicht möglich. Die Folge hiervon sind außerordentlich unsichere und schwankende Arbeitsergebnisse in Bezug auf Durchsatz und Zusammensetzung der Reaktionsprodukte, was insbesondere in Bezug auf die immer wieder auftretende Bildung unerwünschter Schadstoffe- bis hin zur Bildung von mit der Abluft in die Atmosphäre gelangenden giftigen Substanzen, wie Dioxin und Phosgen—von erheblichem Nachteil ist.

Der vorliegenden Erfindung liegt demgemäß als Aufgabe die Schaffung eines Wirbelschichtreaktors zugrunde, der eine einwandfreie Steuerung der bedeutsamen Parameter, insbesondere der Verbrennungstemperatur und der Fluidisierung des Wirbelbettes erlaubt und die Erfindung besteht darin, daß die Zuführungsleitungen für die flüssigen oder gasförmigen Brennstoffe an ihren gegen den Rost weisenden Enden mit zum Zwecke der Veränderung der Strahlungsrichtung verschwenkbar angeordnete Düsen versehen sind.

Durch die Erfindung ist ein Wirbelschicht-Reaktor geschaffen, der eine einwandfreie Regulierung der Reaktionsbedingungen ermöglicht dadurch daß durch horizontales oder vertikales Verschwenken der Düsen gezielt zonenweise im Bett bestimmte gewünschte Strömungs-, Wirbel- oder Temperaturverhältnisse geschaffen werden können. Hierbei sind zweckmäßig die im wesentlichen horizontalen und vertikalen Rostflächen jeweils in einem Winkel gegen die Horizontale bzw. Vertikale angestellt und/oder in der Fläche gewölbt ausgebildet, wodurch einerseits beim Verschwenken der Düsen eine im wesentlichen senkrecht auf die Rostfläche gerichtete Anströmung gewährleistet wird und andererseits im Dienste der Vermeidung von Dioxinbildung in der Rostfläche keine Rücksprünge oder toten Winkel oder Ecken gebildet werden, in denen sich gegebenenfalls Materialien niederschlagen, die ausreichende Zeit zur Abreakton zu schädlichen oder gar giftigen Materialien haben. Auf diese Weise können als weiterer wesentlicher Vorteil des Wirbelschicht-Reaktors gemäß Erfindung erstmals Stoffe eingesetzt werden, deren Einsatz bezw. Vernichtung bisher nicht möglich gewesen ist. So können etwa—je nach Erfordernis—endotherm oder exotherm reagierende chlorhaltige Reaktionsgase aus chemischen Syntheseprozessen, hoch-kalorische Deponiegase, Altöle und jede Art anderer zur Vernichtung vorgesehener flüssiger oder gasförmiger Abfallstoffe zugesetzt werden, die aufgrund ihrer unmittelbaren Zugabe in die Reaktionszone mit Sicherheit im Wirbelbett reagiert und auch nicht zu kleinen Anteilen unreagiert mit dem Abgas ausgetragen werden und hierbei—d.h. bei der erwünschten Vernichtung—zusätzlich eine regulierende Wirkung ausüben. Die Zuführung in horizontaler Richtung in die im wesentlichen vertikalen Zonen dient einerseits dem Schutz der Zuführungsleitungen gegen durch den Rost fallenden feste Reaktionsbestandteile und ermöglicht weiterhin die Verbesserung der Reaktionssteuerung insofern, als aufgrund der Strömungsenergie der zugeführten Gase eine Rotation des Wirbelbettes geschaffen wird, die zu einer gleichmäßigeren Verteilung auch der festen zugeführten Abfallmaterialien im Feuer- bzw. Reaktionsraum und damit zu einer besseren Reaktion führt, wobei durch die Rotation auch die Verweildauer der Materialien im Bett verlängert, d.h. die Gefahr eines Austrages unverbrannter gas-förmiger und staubförmiger Materialien mit dem Rauchgas vermindert wird. Durch Veränderung des Druckes der flüssigen oder gasförmigen Abfallstoffe ist hierbei eine Beschleunigung oder Verzögerung der Rotations- und Reaktionsgeschwindigkeit des Bettes entsprechend den jeweiligen Erfordernissen möglich.

In einer Weiterbildung des Wirbelschicht-Reaktors gemäß Erfindung kann im Kopf bezw. Dom des Schachtes eine sich über einen Teil oder den gesamten Schachtquerschnitt erstreckende Regulierungsanordnung für die Strömung der Rauchgase angeordnet sein, mit deren Hilfe—wie Versuche ergeben haben—in weiten Grenzen die Reaktionsverhältnisse in der Wirbelschicht beeinflußt werden können, insbesondere die Durchsatzmenge der verschiedenen Materialien den jeweiligen Verhältnissen entsprechend optimiert werden kann. Hierbei dient vorteilhaft die Regulierungseinrichtung gleichzeitig als Reaktionszone zur Durchführung bestimmter gewünschter Reaktionen, beispielsweise zur Umreakation von während der Verbrennung gebildeter Stickoxide, zu welchem Zweck die Regulierungseinrichtung beispielsweise von einer aus durchbrochenen Wänden gebildeten, eine Schüttung von im wesentlichen aus Mangan-III-Oxid bestehenden Pellets enthaltenden Kammer oder mehreren solchen Kammer gebildet sein kann, wobei die Pellets außer Mangan-III-Oxid zum Zwecke der Abreaktion evtl. mitgeführter Chlorverbindungen Anteile von gebranntem Kalk (CaO) enthalten können. Es kann die Regulierungseinrichtung bezw. Nachreaktionszone auch von einem Lamellen-Schieber und oder einem hochporösen Keramikträger gebildet sein, dessen Lamellen/Keramikträger durch Tauchen in Mangannitrat und thermische Behandlung mit einer Beschichtung aus Mangan-III-Oxid versehen sind.

In Weiterbildung des Wirbelschichtreaktors der Erfindung sind zweckmäßig dem Reaktor ein Aggregat oder mehrere Aggregate zur Erzeugung bezw. Aufbereitung der für die Bettregulierung erforderlichen Gase vorgeschaltet, so beispielsweise ein Aggregat zur vorbereitenden thermischen Aufbereitung der zu behandelnden festen Abfälle. In diesem Sinne kann dem Reaktor ein mit einem Beheizungssystem versehenes Aggregat zur selektiven Abschmelzung thermoplastischer Materialenteile aus dem Abfall vorgeschaltet sein, dessen Beheizungssystem direkt oder indirekt mit der Rauchgasleitung bezw. einem Wärmetauscher zur Rückgewinnung der Abwärme des Reaktors und dessen Gasraum mit der Zuführungsleitung für gasförmige Abfall- bezw. Brennstoffe zum Reaktorrost verbunden ist. Es wird hierdurch neben einer guten Verwertung der entstehenden Abwärme eine jedenfalls teilweise Rückgewinnung der in den Abfallstoffen thermoplastischen Materialien und gleichzeitig eine schadensfreie Vernichtung der bei der Rückgewinnung entstehenden selbste schädlichen oder schädliche Reaktions-produkte bildenden Chlorhaltigen Gase—Dioxine, Phosgene, Phurane—erreicht.

Ein für einen solchen Zweck geeignetes Aggregat kann beispielsweise von einer Doppelmantelkammer gebildet sein, deren Mantelraum der Führung des Heizmediums dient und in der eine Sieb- und Umwälzeinrichtung für die festen Abfälle angeordnet ist, die von einem feststehenden oder rotierenden Lochmantelrohr oder einem Rüttelsieb gebildet sein kann, in dem bezw. über dem zwei gegeneinanderlaufende, dem Transport und der Zerkleinerung sich evtl. bildender Verklumpungen dienende Schnecken angeordnet sind. Hierbei ist zweckmäßig zwischen dem Aggregat und dem Reaktor eine Mischkammer vorgesehen, in der die Abgase der Abfallaufbereitung, anderweitige nicht-brennbare oder brennbare Gase, beispielsweise Deponiegase, und Verbrennungssauerstoff zur Eingabe in den Rostbereich des Reaktors vorgemischt werden.

Die Erfindung ist in der Zeichnung beispielsweise veranschaulicht. Es zeigen.

Fig. 1 einen Wirbelschichtreators mit vorgeschalteter PVC-Aufbereitungsanlage in schematischer Darstellung

Fig. 2 einen Wirbelschichtreaktor mit beidseitig gestufter Rostfläche und beidseitiger Venturi-Einschnürung in schematischer Darstellung

Fig. 3 die summarische Wiedergabe einer Reihe von Abwandlungen des Rostes im Bereich der Abstufung

Fig. 4 eine vergrößerte schematische Darstellung des in Fig. 1 wiedergegebenen Wirbelschicht-Reaktors

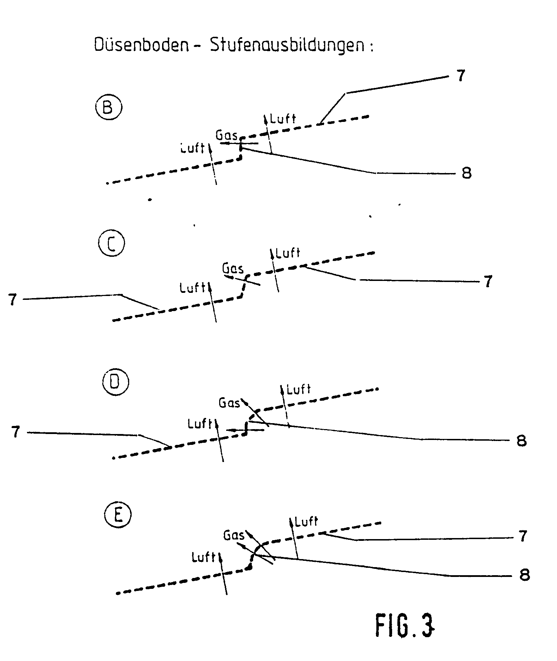

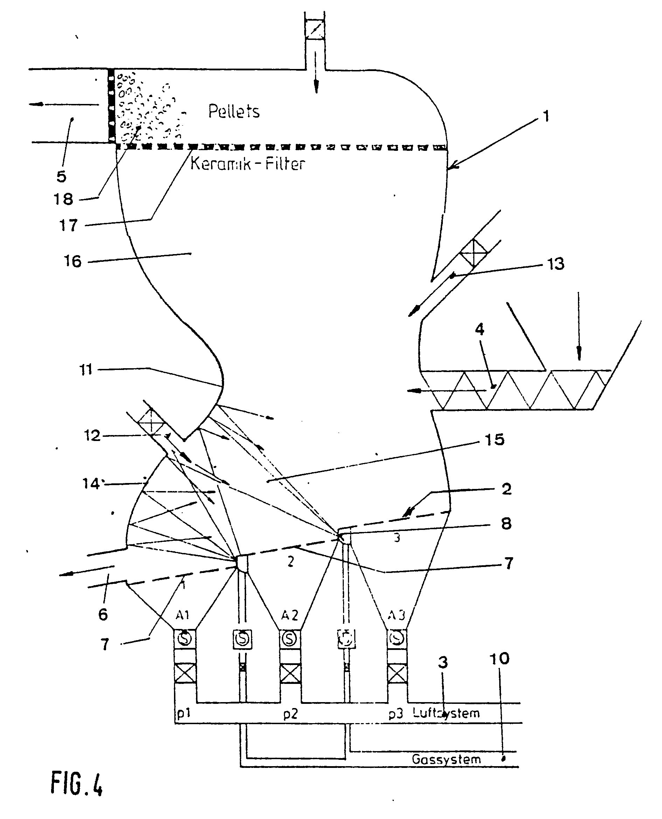

Der In der Zeichnung dargestellte Wirbelschicht-Reaktor zur thermischen Beseitigung von Abfällen bestehet aus einem Schacht 1 mit einem sich um unteren Bereich über den gesamte Querschnitt erstreckenden, als Ganzes mit 2 bezeichneten Rost, einem Zuführungskanal 3 zu dem unterhalb des Rostes gelegenen Bereich für die Reaktionsluft, einer Zuführungsöffnung 4 für feste Stoffe und/oder Zuschlagstoffe im Schacht 1 sowie einem vom Kopf bezw. Dom des Schachtes ausgehenden Abzugskanal 5 für gasförmige Reaktionsprodukte und einer seitlich unmittelbar über dem Rost liegenden Öffnung 6 zum Abzug fester Reaktionsprodukte. Der Rost 2 ist—siehe insbesondere Fig. 4—stufenförmig mit abwechselnd im wesentlichen horizontalen Rostflächen 7 sowie im wesentlichen vertikalen Rostflächen 8 ausgebildet und weist in dem unterhalb des Rostes 2 gelegenen Raum 9 Zuführungsleitungen 10 für gasförmige und/oder flüssige Brenn- oder Abfallstoffe auf, die an den im wesentlichen vertikalen Rostflächen 8 des Reaktors münden. Die gestuften Rostflächen 7, 8 können sich winkelrecht zueinder bei völlig horizontaler Lage der einen Flächen 7 erstrecken, sie weisen jedoch zweckmäßig in der in Fig. 3, Abb, B bis E wiedergegebenen Weise einzeln oder beide eine Neigung zueinander und zu der jeweiligen (horizontalen bezw. vertikalen) Bezugsebene auf, sodaß die horizontalen und vertikalen Rostflächen einerseits insgesamt eine geneigte schräge Fläche und Andererseits miteinander stumpfe Winkel einschließen, so daß keine Rücksprünge oder tote Ecken gebildet sind, in denen sich Ablagerungen bilden können, Hierbei ist die Anordnung so getroffen, daß die horizontalen Rostflächen 7 unterschiedliche Durchströmbezw. Düsenquerschnitte aufweisen derart, daß die Düsen- bezw. Durchströmöffnungen der tiefer gelegenen Rostflächen einen geringeren Querschnitt als die Öffnungen der jeweils höher gelegenen Rostfläche ($A1^2$ $A2^2$ A3), so daß sich aufgrund des an allen Rostflächen gleich statischen Druckes ein entsprechend umgekehrt gestufter dynamischer Druck ($p3^2$ $p2^2$ p1) an den Rostflächen einstellt.

Der Schacht 1 ist in einem oberhalb des Restes 7, 8 gelegenen Bereich mit einer den Rauchgas-Querschnitt venturi-düsenartig verengenden Einschnürung 11 versehen, wobei der die Einschünrung bildende Wandteil 11 a eine sich stetig verjüngende Form aufweist.

Die Zuführungsleitungen 10 für die gasförmigen bezw. flüssigen Brennstoffe sind als Rohrleitungen ausgebildet, die mit ihrer öffnungskante bündig an der im wesentlichen vertikalen Rostfläche 8 anliegen, wobei in einer Abwandlung dieser Ausführungsform die Zuführungsleitungen 10 für die flüssigen oder gasförmigen Brennstoffe an ihren gegen den Rost weisenden Enden mit zum Zwecke der Veränderung der Strahlungsrichtung verschwenkbar angeordneten Düsen versehen sind.

Insbesondere unter der Wirkung der in einer im wesentlichen horizontalen Richtung über die Zuführungsleitungen 10 zuströmenden Gase ergibt sich in Verbindung mit der stetig gekrümmten Wand 14 der Venturi-Einschnürung die erwünschte und angestrebte Turbulenz des Wirbelbettes, die in Fig. 4 in einer schematischen Weise dargestellt ist. Sie läßt erkennen, daß das Material aufgrund der mit dem Gasstrom eingebrachten kinetischen Energie einerseits und der sich stetig verjüngende Form der Venturifläche 14 andererseits in einer natürlichen Stromfadenbewegung abgelenkt wird, die sich im wesentlichen daraus ergibt, daß die von dem Gasstrom mitgenommenen Körner des Bettmaterials gegen die gewölbte Wandfläche der Venturiverengung prallen und in einem dem Aufprallwinkel entsprechenden Rückprallwinkel zurückgeworfen werden. Die graphische Darstellung läßt auch erkennen, daß der Rückprall der in den tiefer gelegenen Ebenen auftreffenden Körner in einer tendenziell nach oben weisenden Richtung und der Rückprall der in den höher gelegenen Ebenen auftreffenden Körner in einer tendenziell nach unten weisenden Richtung verläuft, so daß sich in der Summe eine im wesentlichen horizontale rücklaufende Fließrichtung ergibt. Die sich "kreuzende" Strömungstendenz der Teilströme bewirkt jedoch insbesondere die vorteilhafte ständige Durchmischung des Materials in sich, wobei der Bettstrom im wesentlichen in einer schwach geneigten horizontalen Walze umläuft, aus der das mit umwälzende (Rauch)-Gas "weich", d.h. ohne Mitführung wesentlicher Feststoffanteile nach oben durch die Durchströmöffnung austritt.

Der Schacht 1 ist weiterhin in dem Bereich der Einschnürung 11—siehe Fig. 4—mit zwei Zuführungsöffnungen 12, 13 für gas- und/oder staubförmige Zuschlagstoffe, insbesondere kalkhaltige Zuschlagstoffe versehen, von denen die eine Zuführung 12 unterhalb des engsten Querschnitts der Einschnürung 11 im Brennraum 15 und die andere Zuführung 13 oberhalb des engsten Querschnittes der Einschnürung 11 im Gasraum 16 des Reaktors münden.

Im Kopf bzw. Dom des Schachtes ist—siehe insbesondere Fig. 4—eine sich über den gesamten Schachtquerschnitt erstreckende, Mangan-III-Oxid als Reaktionsmaterial enthaltende Nachreaktionszone angeordnet, die im dargestellten Beispiel von einer aus durchbrochenen Wänden 17 gebildeten, eine Schüttung 18 von im wesentlichen aus Mangan-III-Oxid bestehenden Pellets enthaltenden Kammer gebildet ist. Die Pellets können außer Mangan-III-Oxid gebrannten Kalk (CaO) enthalten, wodurch nicht nur eine Beseitigung der während der Verbrennung gebildeten Stickoxide und des Kohlenmonoxids sondern nochmals eine Bindung von in den Rauchgasen enthaltenen Spuren von Chlorverbindungen erzielt wird. Die Kalkzone kann auch von einer gesondert nachgeschalteten Schüttung aus Kalkpellets gebildet sein.

In einer weiteren, in der Zeichnung nicht dargestellten Ausführungsform kann die Nachreaktionszone auch von einem Lamellen-Schieber gebildet sein, dessen Lamellen durch Tauchen in Mangannitrat und thermische Behandlung mit einer Beschichtung aus Mangan-III-Oxid versehen ist, in welchem Falle noch erweiterte Möglichkeiten der Rauchgas- und Verbrennungsteuerung erzielt werden.

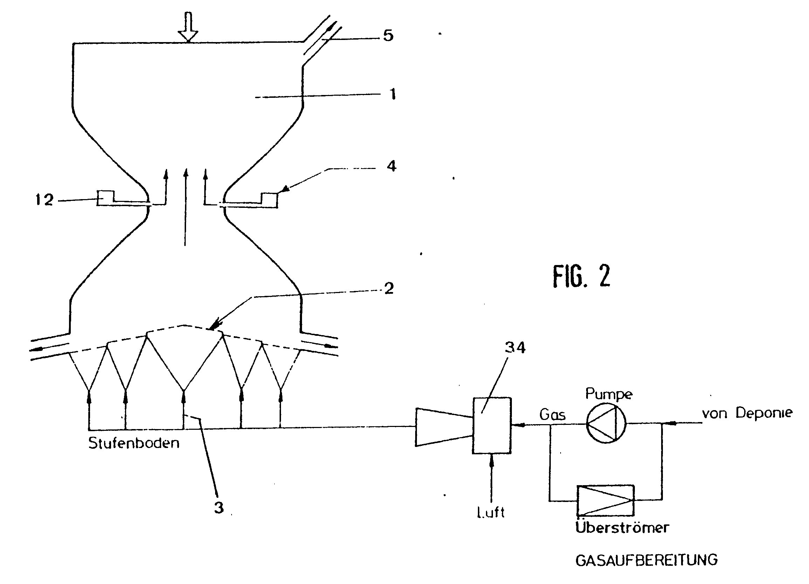

In einer anderen in Fig. 2 wiedergegebenen Ausführungsform können der Rost 7 beidseitig gestuft und der Schacht entsprechend mit einer beidseitigen Einschnürung 11 versehen sein, in welchem Falle sich im Betrieb eine beidseitig spiegelbildlich umlaufende Turbulenzwalze ausbildet. Im Falle dieser Ausführungsform sind die Zugabeöffnungen für die Zuschläge beidseitig in der Ebene des engsten Querschnittes angeordnet.

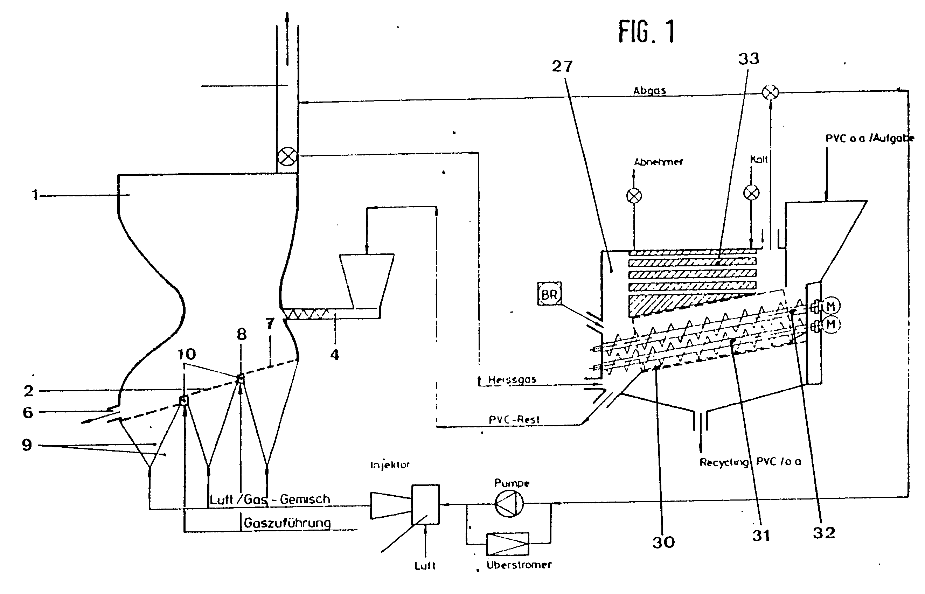

Dem Reaktor ist—siehe Fig. 1—ein Aggregat zur vorbereitenden thermischen Aufbereitung der Abfälle vorgeschaltet, das im dargestellten Beispiel von einer geschlossenen, mit einem Beheizungssystem versehenen Kammer 27 zur selektiven Abschmelzung thermoplastischer Materialanteile, insbesondere PVC, aus dem Abfall gebildet ist. Die Kammer ist hierbei zweckmäßig als Doppelmantelkammer ausgebildet, deren Mantelraum der Führung eines Heizmediums dient und in die eine Sieb- und Umwälzeinrichtung für die festen Abfälle angeordnet ist. Diese ist in der dargestellten Ausführungsform von einem Lochmantelrohr 30—an dessen Stelle auch ein Rüttelsieb vorgesehen sein kann—gebildet, in dem zwei gegeneinanderlaufende, dem Transport und der Zerkleinerung sich evtl. bildender Verklumpungen dienende Schnecken 31, 32 angeordnet sind. Es ist weiterhin einerseits der Mantelraum der Kammer direkt oder indirekt mit der Rauchgasleitung bezw. einem Wärmetauscher 33 zur Rückgewinnung der Abwärme und andererseits der Gasraum der Kammer mit der Zuführungsleitung 3 für gasförmige Abfall- bezw. Brennstoffe zum Reaktorrost 7, 8 verbunden. Zwischen dem Aggregat und dem Reaktor ist eine Mischkammer 34 vorgesehen, in der die Abgase der Abfallaufbereitung, anderweitige nichtbrennbare oder brennbare Gase, beispielsweise Deponie-, Pyrolyse- oder Synthesegase, und Verbrennungssauerstoff zur Eingabe in den Reaktor vorgemischt werden.

**Patentansprüche**

1. Wirbelschicht-Reaktor zur thermischen Beseitigung von Abfällen, bestehend aus einem Schacht mit einem sich im unteren Bereich über den gesamten Querschnitt erstreckenden Rost, mindestens einem Zuführungskanal zu dem unterhalb des Rostes gelegenen Bereich für den Reaktionssauerstoff, einer oder mehrerer Zuführungsöffnungen für feste Stoffe und/oder Zuschlagstoffe in der Schachtwand sowie einem vom Kopf bezw. Dom des Schachtes ausgehenden Abzugskanal für gasförmige Reaktionsprodukte und einer seitlich unmittelbar über dem Rost liegenden Öffnung zum Abzug fester Reaktionsprodukte, wobei der Rost stufenförmig mit abwechselnd im wesentlichen horizontalen Rostflächen (7) sowie im wesentlichen vertikalen Rostflächen (8) ausgebildet ist und in dem unterhalb des Rostes (2) gelegenen Raum (9) Zuführungsleitungen (20) für gasförmige und/oder flüssige Brenn- oder Abfallstoffe vorgesehen sind, dadurch gekennzeichnet, daß die Zuführungleitungen (10) für die flüssigen oder gasförmigen Brennstoffe an ihren gegen den Rost weisenden Enden mit zum Zwecke der Veränderung der Strahlungsrichtung verschwenkbar angeordneten Düsen versehen sind.

2. Wirbelschicht-Reaktor nach Anspruch 1, dadurch gekennzeichnet, daß die im wesentlichen horizontalen und vertikalen Rostflächen (7, 8) jeweils einen Winkel mit der Vertikalen bezw. Horizontalen einschließen derart, daß sich in der Rostflächen keine Rücksprünge oder tote Ecken bilden.

3. Wirbelschicht-Reaktor nach Anspruch 1 oder 2, dadurch gekennzeichnet, daß die horizontalen Rostflächen (7) unterschiedliche Durchströmbezw. Düsenquerschnitte aufweisen derart, daß die Düsen- bezw. Durchströmöffnungen der tiefer gelegenen Rostflächen einen geringeren Querschnitt ($A1^2$ $A2^2$ A3) als die Öffnungen der jeweils höher gelegenen Rostfläche, so daß sich aufgrund des an allen Rostflächen gleichen statischen Druckes ein entsprechend umgekehrt gestufter dynamischer Druck an den Rostflächen einstellt.

4. Wirbelschicht-Reaktor nach einem der Ansprüche 1 bis 3, dadurch gekennzeichnet, daß im Kopf bezw. Dom des Schachtes eine sich über den gesamten Schachtquerschnitt erstreckende, Mangan-III-Oxid als Reaktionsmaterial enthaltende Nachreaktionszone (16) angeordnet ist.

5. Wirbelschicht-Reaktor nach Anspruch 4, dadurch gekennzeichnet, daß die Nackreaktionszone von einer aus durchbrochenen Wänden (17) gebildeten, eine Schüttung (18) vom im wesentlichen aus Mangan-III-Oxid bestehenden Pellets enthaltenden Kammer gebildet ist.

6. Wirbelschicht-Reaktor nach Anspruch 5, dadurch gekennzeichnet, daß die Pellets außer Mangan-III-Oxid gebrannten Kalk (CaO) enthalten.

7. Wirbelschicht-Reaktor nach Anspruch 4, dadurch gekennzeichnet, daß die Nachreaktionszone von einem Lamellen-Schieber und/oder einem hochporösen Keramikträger gebildet ist, dessen Lamellen/Keramikträger durch Tauchen in Mangannitrat und thermische Behandlung mit einer Beschichtung aus Mangan-III-Oxid versehen sind.

8. Wirbelschicht-Reaktor nach einem der Ansprüche 1 bis 7, dadurch gekennzeichnet, daß dem Reaktor ein Aggregat (26) zur vorbereitenden thermischen Aufbereitung der Abfälle vorgeschaltet ist.

9. Wirbelschicht-Reaktor nach Anspruch 8, dadurch gekennzeichnet, daß das Aggregat von einer geschlossenen, mit einem Beheizungssystem versehenen Kammer zur zelektiven Abschmelzung thermoplastischer Materialanteile aus dem Abfall gebildet ist.

10. Wirbelschicht-Reaktor nach Anspruch 9, dadurch gekennzeichnet, daß die Kammer als Doppelmantelkammer ausgebildet ist, deren Mantelraum der Führung eines Heizmdiums dient und in der eine Sieb- und Umwälzeinrichtung für die festen Abfälle angeordnet ist.

11. Wirbelschicht-Reaktor nach Anspruch 10, dadurch gekennzeichnet, daß die Sieb- und Umwälzeinrichtung von einem feststehenden oder rotierenden Lochmantelrohr (30) oder einem Rüttelsieb gebildet ist, in dem bezw. über dem zwei gegeneinanderlaufende, dem Transport und der Zerlkeinerung sich evtl. bildender Verklumpungen dienende Schnecken (31, 32) angeordnet sind.

12. Wirbelschicht-Reaktor nach einem der Ansprüche 8 bis 11, dadurch gekennzeichnet, daß der Mantelraum der Kammer direkt oder indirekt mit der Rauchgasleitung bezw. einem Wärmetauscher (33) zur Rückgewinnung der Abwärme verbunden ist.

13. Wirbelschicht-Reaktor nach einem der Ansprüche 1 bis 12, dadurch gekennzeichnet, daß der Gasraum der Kammer mit der Zuführungsleitung (3) für gasförmige Abfall- bezw. Brennstoffe zum Reaktorrost (7, 8) verbunden ist.

14. Wirbelschicht-Reaktor nach Anspruch 13, dadurch gekennzeichnet, daß zwischen dem Aggregat und dem Reaktor eine Mischkammer (34) angeordnet ist, in der die Abgase der Abfallaufbereitung, anderweitige brennbare oder nichtbrennbare Gase, beispielsweise Deponiegase oder Synthesegase, und Verbrennungssauerstoff zur Eingabe in den Reaktor vorgemischt werden.

**Revendications**

1. Réacteur à couche fluidisée pour l'élimination thermique de déchets, constitué par un puits avec une grille s'étendant dans la region inférieure sur toute la section, par au moins un canal d'amenée de l'oxygene de réaction pour la région située en-dessous de la grille, par un ou plusieurs orifices d'amenée pour des matières solides et/ou des matières additionnelles amenagées dans la paroi du puits ainsi que par un canal de sortie partant de la tête ou du dôme du puits pour les produits de réaction gazeux et par un orifice situe lateralement et immédiatement au-dessus de la grille pour l'évacuation de produits de réaction fixes, dans lequel la grille est constituée en échelons avec tour à tour des surfaces de grilles sensiblement horizontales (7) et des surfaces de grilles sensiblement verticales (8) et dans lequel sont prévues dans l'espace (9) situé en-dessous de la grille (2) des conduits d'amenée (10) pour des combustibles ou des déchets gazeux et/ou liquides, caractérisé en ce que les conduites d'amenée (10) pour combustibles liquides ou gazeux sont munies à leurs extrémités orientées vers la grille de buses disposées pivotantes dans un but de modification de la direction du jet.

2. Réacteur à couche fluidisée selon la revendication 1, caractérisé en ce que les surfaces de grilles sensiblement horizontales et verticales (5, 8) forment respectivement avec la verticale ou l'horizontal un angle tel qu'il ne se constitue pas sur la surface de la grille de retraits ou d'angles morts.

3. Réacteur à couche fluidisée selon la revendication 1 ou 2, caractérisé en ce que les surfaces de grilles horizontales (7) présentent des sections de passage ou de buses différentes, en ce que les ouvertures de buses ou de passage des surfaces de grilles situées pous bas ont une section (A1$^2$, A2$^2$, A3) plus petite que celle des ouvertures de la surface de grille située respectivement plus haut, de sorte qu'en raison de la pression statique identique appliquée à toutes les surfaces de grille il s'établit une pression dynamique étagée de manière inversement proportionnelle sur les surfaces de grilles.

4. Réacteur à couche fluidisée selon l'une quelconque des revendications 1 à 3, caractérisé en ce qu'est disposée dans la tête ou dans le dôme du puits une zone de post-réaction (16) s'étendant sur toute la section du puits et contenant de l'oxyde de manganèse III comme matière de réaction.

5. Réacteur à couche fluisidée selon la revendication 4, caractérisé en ce que la zone de post-réaction est constituée par une chambre comportant des parois (17) ajourées et d'une charge de boulettes essentiellement constituées par de l'oxyde de manganèse III.

6. Réacteur à couche fluidisée selon la revendication 5, caractérisé en ce que les boulettes contiennent, en plus de l'oxyde de manganèse III, de la chaux calcinée (CaO).

7. Réacteur à couche fluidisée selon la revendication 4, caractérisé en ce que la zone de postréaction est constituée par un tiroir à lamelles et/ou un support de céramique très poreux, dont le support de céramique/de lamelles est pourvu d'un revêtement d'oxyde de manganèse III par immersion dans du nitrate de manganèse suivie d'un traitement thermique.

8. Réacteur à couche fluidisée selon l'une quelconque des revendications 1 à 7, caractérisé en ce qu'est monté en amont du réacteur un groupe (26) pour le traitement thermique préparatoire des déchets.

9. Réacteur à couche fluidisée selon la revendication 8, caractérisé en ce que le groupe est constitué par une chambre fermée, pourvue d'un système de chauffage pour la fusion sélective de la fraction des déchets constituée par des matières thermoplastiques.

10. Réacteur à couche fluidisée selon la revendication 9, caractérisé en ce que la chambre est constituée par une chambre à double chemise, dont l'intervalle entre les chemises sert au guidage d'un agent de chauffage et dans laquelle est dispose un dispositif de tamisage et de circulation pour les déchets solides.

11. Réacteur à couche fluidisée selon la revendication 10, caractérisé en ce que le dispositif de tamisage et de circulation est constitué par un tube à chemise perforée (30) fixe ou tournant ou par un tamis à secousses, dans lequel ou au-dessus duquel sont disposées deux viz sans fin (31, 32) servant au transport et à la réduction de mottes se formant éventuellement.

12. Réacteur à couche fluidisée selon l'une quelconque des revendications 8 à 11, caractérisé en ce que l'intervalle entre les chemises de la chambre est relié directement à une conduite de gaz de fumée ou à un échangeur de chaleur (33) pour la récupération de la chaleur perdue.

13. Réacteur à couche fluidisée selon l'une quelconque des revendications 1 à 12, caractérisé en ce que le compartiment de gaz de la chambre est relié à la conduite d'amenée des déchets ou combustibles gazeux vers la grille du réacteur (7, 8).

14. Réacteur à couche fluidisée selon la revendication 13, caractérisé en qu'est dispose entre le groupe et le réacteur une chambre de mélange (34), dans laquelle les gaz brûlés du traitement des déchets, les gaz combustibles d'autre manière ou non combustibles, comme par exemple, les gaz émanant de dépôts, ou des gaz de synthèse et l'oxygène de combustion sont mélangés préalablement à leur entrée dans le réacteur.

**Claims**

1. Fluidized bed reactor for thermal removal of waste, comprising a shaft with grate extending in the lower region across the entire cross-section, at least one inlet channel to the section below the grate for reaction oxygen, one or more supply openings in the shaft wall for solid and/or aggregate substances as well as a culvert commencing from the top or dome respectively of the shaft for gaseous reaction products and an opening located laterally immediately above the grate for the removal of solid reaction products, wherein the grate has graduated, alternating basically horizontal grate surfaces (7) as well as basically vertical grate surfaces (8), and supply pipes (10) for gaseous and/or liquid fuel or waste being provided in the space (9) below the grate (2), characterized in that the supply pipes (10) for liquid or gaseous fuel are fitted with pivotably arranged nozzles for the purpose of changing the direction of radiation.

2. Fluidized bed reactor according to claim 1, characterised in that the basically horizontal and vertical grate surfaces (7, 8) each include an angle toward the vertical or horizontal respectively in such a manner that no recesses or hidden corners are formed in the grate surface.

3. Fluidized bed reactor according to claim 1 or 2, characterised in that the horizontal grate surfaces (7) have different flow-through or nozzle areas respectively so that the nozzle or flow-through openings respectively of the lower grate surfaces have a smaller cross-section (A1$^2$ A2$^2$ A3) than the openings of the higher grate surfaces so that, based on the static pressure which is equal to all grate surfaces, a correspondingly reversed graduated dynamic pressure exists at the grate surfaces.

4. Fluidized bed reactor according to one of the claims 1 to 3, characterised in that a post-reaction zone (16) which extends over the entire shaft cross-section and contains manganese-III-oxide as reaction material is disposed in the head or dome respectively of the shaft.

5. Fluidized bed reactor according to claim 4, characterised in that the post-reaction zone is a chamber composed of pierced walls (17) with a charge (18) of pellets basically of manganese-III-oxide.

6. Fluidized bed reactor according to claim 5, characterised in that the pellets contain both manganese-III-oxide and burnt lime (CaO).

7. Fluidized bed reactor according to claim 4, characterised in that the post-reaction zone is formed by a lamellar slide and/or a highly porous ceramic carrier, which lamellar slides/ceramic carriers are manganese-III-oxide coated by submersion into manganese nitrate and thermal treatment.

8. Fluidized bed reactor according to one of the claims 1 to 7, characterised in that the reactor has a corporate unit (26) added for preparatory thermal treatment of the waste.

8. Fluidized bed reactor according to claim 8, characterised in that the corporate unit includes a closed chamber with a heating system for selective melting off of thermoplastic material particles from the waste.

10. Fluidized bed reactor according to claim 9, characterised in that the chamber is a twin-casing chamber the casing space of which serves as a duct of a heating medium and which includes a filtering and rotating device for solid waste.

11. Fluidized bed reactor according to claim 10, characterised in that the filtering and rotating device is formed by a fixed or rotating perforated pipe casing (30) or a shaking screen in/above which are placed two worm rods (31, 32), rotating in opposite directions serving the transport and reduction in size of lumps that may develop.

12. Fluidized bed reactor according to one of the claims 8 to 11, characterised in that the casing space of the chamber is directly or indirectly connected with the waste-gas pipe or a heat exchanger (33) respectively for recycling of the waste heat.

13. Fluidized bed reactor according to one of the claims 1 to 12, characterised in that the gas area of the chamber is connected with the inlet channel (3) for gaseous waste or fuel respectively to the reactor grate (7, 8).

14. Fluidized bed reactor according to claim 13, characterised in that a mixing chamber (34) is located between the corporate unit and the reactor, into which mixing chamber spent gases of the waste treatment, other combustible or non-combustible gases, for example waste gases or synthetic gases and combusted oxygen are premixed for feeding into the reactor.

FIG. 1

EP 0 202 285 B1

1

Abgas

27   33

PVC a a /Aufgabe

Abnehmer   Kalt

1

BR

8   7

10

2

6

4

9

Heissgas

PVC-Rest

Injektor

Luft/Gas-Gemisch

Gaszuführung

Pumpe

Recycling PVC /o a

30   31   32

Luft   Überstromer

FIG. 2

von Deponie

Pumpe

Überströmer

GASAUFBEREITUNG

Gas

Luft

34

Stufenboden

5
1
4
2
3
12

Düsenboden – Stufenausbildungen :

FIG.3

Pellets

Keramik-Filter

FIG.4

p1    p2    p3  Luftsystem

Gassystem

4